# EUROPÄISCHE PATENTSCHRIFT

(11) **EP 1 417 460 B1**
(45) Veröffentlichungstag und Bekanntmachung des Hinweises auf die Patenterteilung: **28.10.2009**
(21) Anmeldenummer: 02754483.2
(22) Anmeldetag: 01.08.2002
(51) Int. Cl.: G01D 7/04, G01D 21/02, G01P 1/08

(54) **ZEIGERINSTRUMENT**
INDICATING INSTRUMENT
INSTRUMENT A AIGUILLE

(30) Priorität: 15.08.2001 DE 10139001
(43) Veröffentlichungstag der Anmeldung: 12.05.2004
(73) Patentinhaber: Continental Automotive GmbH, 30165 Hannover (DE)
(72) Erfinder: NOLL, Heinrich, 64823 Gross-Umstadt (DE); ABEL, Heinz-Bernhard, 63762 Grossostheim (DE)
(86) Internationale Anmeldenummer: PCT/DE2002/002845
(87) Internationale Veröffentlichungsnummer: WO 2003/016830

(56) Entgegenhaltungen:
- WO-A-97/22853
- PATENT ABSTRACTS OF JAPAN vol. 2000, no. 08, 6. Oktober 2000 (2000-10-06) & JP 2000 136946 A (HARNESS SYST TECH RES LTD;SUMITOMO WIRING SYST LTD; SUMITOMO ELECTRIC), 16. Mai 2000 (2000-05-16)

## Beschreibung

Die Erfindung betrifft ein Zeigerinstrument, insbesondere Tachometer für ein Kraftfahrzeug, welches ein beleuchtbares Zifferblatt hat, über das sich ein Zeiger zu bewegen vermag, und welches einen zusätzlichen Anzeigebereich mit dicht aufeinander folgenden, einzeln beleuchtbaren Anzeigesegmenten aufweist.

Zeigerinstrumente der vorstehenden Art sind bekannt und als Tachometer in Kraftfahrzeugen gebräuchlich. In der Tachoanzeige sollen zunehmend neben der Geschwindigkeit weitere geschwindigkeitsabhängige Größen, beispielsweise durch eine Abstandsregelung oder Abstandswarnung gewonnene Größen oder die durch eine Geschwindigkeitsregelung eingestellte Geschwindigkeit, angezeigt werden. Diese zusätzlichen Anzeigen werden dadurch verwirklicht, dass einzelne Segmente oder Segmentbänder aufleuchten. Dabei ist es erforderlich, dass die Segmenteinteilung sehr eng ist. Oft wird auch der Skalenstrich selbst als Anzeige genutzt, indem er angesteuert heller und eventuell andersfarbig aufleuchtet als nicht angesteuert.

Solche zusätzlichen Anzeigebereiche werden derzeit üblicherweise dadurch ausgebildete dass man hinter jedem Anzeigesegment einen Lichtschacht anordnet, in dem sich eine Leuchtdiode oder mehrere Leuchtdioden befinden. Hierdurch entstehen jedoch große Platzprobleme. Viele der gewünschten Anzeigevarianten lassen sich deshalb aus Platzgründen nicht verwirklichen. Insbesondere sind mehrfarbige Anzeigen sehr aufwendig. Weiterhin ist die Entflechtung der Leiterplatte schwierig und erfordert eine mehrlagige Ausbildung der Leiterplatte.

Die WO 97/228532 A beschreibt ein Zeigerinstrument in Form eines Tachometers mit einem beleuchteten Ziffernblatt, wobei sich über dem Ziffernblatt ein Zeiger bewegen kann. Weiterhin weist das Zifferblatt einen zusätzlichen Anzeigebereich mit dicht aufeinanderfolgenden einzeln beleuchtbaren Anzeigesegmenten auf, wobei diese Anzeigesegmente mittels Glühlampen oder Leuchtdioden beleuchtbar sind.

Die JP 2000136946 A beschreibt eine Anzeige mit einem Zifferblatt, bei der Zeigerstellungen mittels einzeln ansteuerbaren Anzeigesegmenten, die eine lichtemittierenden Substanz aufweisen, nachgebildet werden. Diese Anzeige ist mittels eines Gehäuses insgesamt abgeschlossen.

Aufgabe der Erfindung ist es, die Lebensdauer der lichtemittierenden Substanz zu erhöhen. Diese Aufgabe wird durch die Merkmale des Anspruchs 1 gelöst.

Insbesondere weist die lichtemittierende Substanz eine Kunststoffverkapselung auf. Diese Kunststoffverkapselung, vorzugsweise Kunststofffolien, die die lichtemittierende Substanz (Polymer) einschließen, dient der Lebensaauererhöhung des Polymers. Durch die Kunststoffverkapselung kann vorteilhaft und in einfacher Weise eine hohe mechanische Flexibilität erreicht werden, es können beliebige Strukturen geschaffen werden, und es ist problemlos möglich, Ausnehmungen vor zusehen. Diese Vorteile bieten beispielsweise Glasplatten nicht.

Bei einem solchen Zeigerinstrument ist der zusätzliche Anzeigebereich äußerst einfach ausgebildet und ermöglicht die Anzeige von eng nebeneinander liegenden Anzeigesegmenten. Da organisch lichtemittierende Displays im angesteuerten Zustand leuchten, ist eine separate Beleuchtung des zusätzlichen Anzeigebereiches nicht erforderlich, so dass insbesondere die bei Zeigerinstrumenten nach dem Stand der Technik sehr aufwendigen Lichtschächte für die einzelnen Anzeigesegmente entfallen. Die OLED-Technologie ermöglicht sogar die Darstellung verschiedener Farben.

Die Vorteile des organisch lichtemittierenden Displays kommen besonders zur Geltung, wenn der zusätzliche Anzeigebereich ein Segmentband mit in einer Reihe angeordneten Anzeigesegmenten ist.

Besonders einfach ist das Zeigerinstrument gestaltet, wenn gemäß einer anderen Weiterbildung der Erfindung der zusätzliche Anzeigebereich als auf das Zifferblatt aufgesetztes Ringsegment ausgebildet ist. Ein solches Ringsegment ist einfach auf ein Zifferblatt aufzubringen.

Alternativ ist es jedoch auch möglich, wenn der zusätzliche Anzeigebereich als das Zifferblatt flanschartig überragendes Ringsegment ausgebildet ist.

Wenn Kraftfahrzeuge mit einer automatischen Abstandsregelung ausgestattet werden, dann besteht der Wunsch, geschwindigkeitsabhängige Größen im peripheren Bereich der Tachometerskala anzuzeigen, was sich durch die vorliegende Erfindung besonders einfach verwirklichen lässt. Deshalb besteht eine andere, vorteilhafte Weiterbildung der Erfindung darin, dass der zusätzliche Anzeigebereich zur Anzeige von Abstandsregelungswerten einer automatischen Abstandsregelung eines Kraftfahrzeugs ausgebildet ist.

Auch die Beleuchtung des Zifferblattes im Durchlichtverfahren kann durch ein organisch lichtemittierendes Display erfolgen, wenn der zusätzliche Anzeigebereich durch einen peripheren Bereich eines zugleich die Rückseite des Zifferblattes abdeckendes, der Zifferblattbeleuchtung dienendes Bauteil gebildet ist.

Auf ein separates Zifferblatt kann verzichtet werden, indem das Zifferblatt durch Anzeigen auf dem Display mit der organisch lichtemittierenden Substanz gebildet ist.

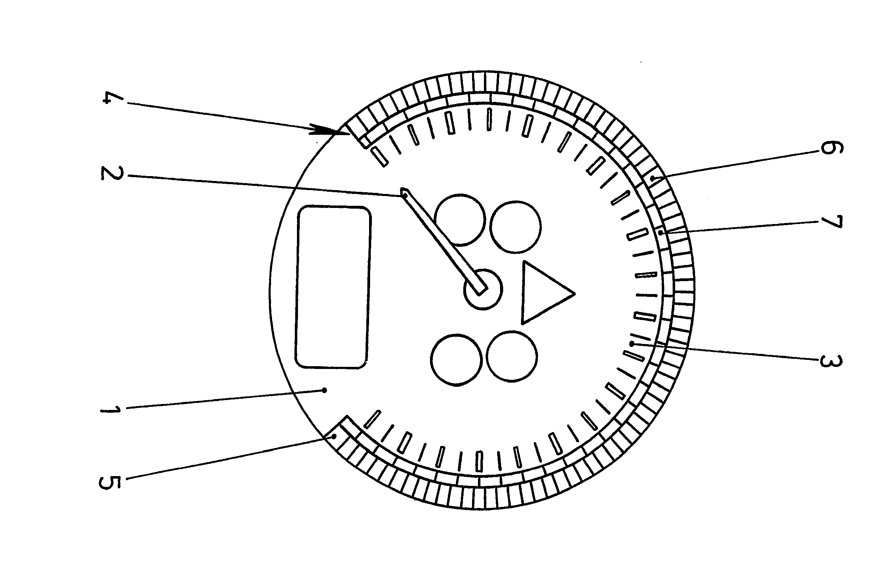

Die Erfindung lässt verschiedene Ausführungsformen zu. Zur weiteren Verdeutlichung ihres Grundprinzips ist eine davon in der Zeichnung dargestellt und wird nachfolgend beschrieben.

Die Zeichnung zeigt ein als Tachometer ausgebildetes Anzeigeinstrument mit einem Zifferblatt 1, über welches sich ein Zeiger 2 zu bewegen vermag. Das Zifferblatt 1 hat eine Skala 3, so dass die jeweilige Geschwindigkeit aufgrund der Zeigerstellung ablesbar ist.

Außenseitig auf dem Zifferblatt 1 ist ein zusätzlicher Anzeigebereich 4 in Form eines Segmentringes 5 aufgebracht. Dieser zusätzliche Anzeigebereich 4 hat koaxial zueinander zwei als Segmentbänder ausgebildete Folgen von Anzeigesegmenten 6, 7. Der Segmentring 5 ist als Display mit einer organisch lichtemittierenden Substanz (OLED) ausgebildet. Die einzelnen Anzeigesegmente 6, 7 können einzeln angesteuert werden, so dass für den Fall einer Abstandswarnung ein leuchtender Bogen angezeigt werden kann, der beispielsweise die Geschwindigkeitsdifferenz eines Kraftfahrzeugs zu vorwegfahrenden Fahrzeug anzeigt. Die inneren Anzeigesegmente 7 können beispielsweise den eingestellten Geschwindigkeitswert bei einer Geschwindigkeitsregelung anzeigen.

## Patentansprüche

1. Zeigerinstrument, insbesondere Tachometer für ein Kraftfahrzeug, welches ein beleuchtbares Zifferblatt hat, über das sich ein Zeiger zu bewegen vermag, und welches einen zusätzlichen Anzeigebereich mit dicht aufeinander folgenden, einzeln beleuchtbaren Anzeigesegmenten aufweist, wobei der zusätzliche Anzeigebereich (4) durch ein Display mit einer organisch lichtemittierenden Substanz gebildet ist und dass bei dem zusätzlichen Anzeigebereich (4) die einzelnen Anzeigesegmente (6, 7) einzeln ansteuerbar ausgebildet sind,
und dass die lichtemittierende Substanz eine kunstatoffverkapselung lichtemittierende Substanz eine Kunototoffverkapselung aufweist.

2. Zeigerinstrument nach Anspruch 1, wobei der zusätzliche Anzeigebereich (4) ein Segmentband mit in einer Reihe angeordneten Anzeigesegmenten (6, 7) ist.

3. Zeigerinstrument nach Anspruch 2, wobei der zusätzliche Anzeigebereich (4) als auf das Zifferblatt (1) aufgesetztes Ringsegment ausgebildet ist.

4. Zeigerinstrument nach zumindest einem der vorangehenden Ansprüche, wobei der zusätzliche Anzeigebereich (4) als das Zifferblatt (1) flanachartig überragendes Ringsegment ausgebildet ist.

5. Zeigerinstrument nach zumindest einem der vorangehenden Ansprüche, wobei der zusätzliche Anzeigebereich (4) zur Anzeige von Abstandsregelungswerten einer automatischen Abetandsregelung eines Kraftfahrzeugs ausgebildet ist.

6. Zeigerinstrument nach zumindest einem der vorangehenden Anspruche, wobei der zubätzliche Anzeigebereich (4) durch einen peripheren Bereich eines zugleich die Rückseite des Zifferblattes (1) abdeckendes, der Zifferblattbeleuchtung dienendes Bauteil gebildet ist.

7. Zeigerinstrument nach zumindest einem der vorangehenden Ansprüche, wobei das Zifferblatt (1) durch Anzeigen auf dem Display mit der organisch lichtemittierenden Substanz gebildet ist.

## Claims

1. Pointer instrument, in particular a tachometer for a motor vehicle, which has an illuminated dial over which a pointer can move, and which has an additional display area with closely succeeding, individually illuminated display segments, in which the additional display area (4) is formed by a display with an organic light-emitting substance, and the individual display segments (6, 7) are designed to be individually drivable in the case of the additional display area (4), and the light-emitting substance has a plastic encapsulation.

2. Pointer instrument according to Claim 1, in which the additional display area (4) is a segmented band with display segments (6, 7) arranged in a row.

3. Pointer instrument according to Claim 2, in which the additional display area (4) is designed as an annular segment mounted on the dial (1).

4. Pointer instrument according to at least one of the preceding claims, in which the additional display area (4) is designed as an annular segment projecting like a flange over the dial (1).

5. Pointer instrument according to at least one of the preceding claims, in which the additional display area (4) is designed to display distance control values of an automatic distance control of a motor vehicle.

6. Pointer instrument according to at least one of the preceding claims, in which the additional display area (4) is formed by a peripheral area of a component which simultaneously covers the rear side of the dial (1) and serves to illuminate the dial.

7. Pointer instrument according to at least one of the preceding claims, in which the dial (1) is formed by displaying on the display with the organic light-emitting substance.

## Revendications

1. Instrument à aiguille, notamment indicateur de vitesse pour véhicule automobile, lequel instrument a un cadran éclairé, au-dessus duquel peut se déplacer une aiguille, et lequel comporte une zone supplémentaire d'affichage avec des segments d'affichage qui se suivent près les uns des autres et qui peuvent être éclairés séparément, où la zone supplémentaire d'affichage (4) est formée par un écran ou display avec une substance organique électroluminescente, où, dans la zone supplémentaire d'affichage (4), les différents segments d'affichage (6, 7) peuvent être commandés séparément et où la substance électroluminescente est encapsulée dans une enveloppe en matière plastique.

2. Instrument à aiguille selon la revendication 1, où la zone supplémentaire d'affichage (4) est une série de segments avec des segments d'affichage (6, 7) disposés sur un rang.

3. Instrument à aiguille selon la revendication 2, où la zone supplémentaire d'affichage (4) est formée par un segment annulaire placé sur le cadran (1).

4. Instrument à aiguille selon au moins l'une des revendications précédentes, où la zone supplémentaire d'affichage (4) est formée par un segment annulaire qui surplombe le cadran (1) à la manière d'une flasque.

5. Instrument à aiguille selon au moins l'une des revendications précédentes, où la zone supplémentaire d'affichage (4) est conçue pour afficher des valeurs d'écartement entre véhicules fournies par un système automatique de régulation des écartements dans un véhicule automobile.

6. Instrument à aiguille selon au moins l'une des revendications précédentes, où la zone supplémentaire d'affichage (4) est formée par une zone périphérique d'une pièce recouvrant en même temps le verso du cadran (1) et servant d'éclairage pour le cadran.

7. Instrument à aiguille selon au moins l'une des revendications précédentes, où le cadran (1) est formé par des affichages sur l'écran avec la substance organique électroluminescente.
